# EUROPEAN PATENT APPLICATION

(11) **EP 3 184 287 A1**
(43) Date of publication of application: **28.06.2017**
(21) Application number: 14900279.2
(22) Date of filing: 09.12.2014
(51) Int. Cl.: B29C 67/20, C08L 25/06

(54) **METHOD FOR MANUFACTURING SYNTHETIC WOOD**

(30) Priority: 22.08.2014 CN 201410417568
(71) Applicant: Yea Der Lih Enterprise Co., Ltd, Tainan City 741 (TW)
(72) Inventor: TSAI, Tzu-Liang, Tainan City 741 (TW)
(74) Representative: Lang, Christian
(86) International application number: PCT/CN2014/001108
(87) International publication number: WO 2016/026065

(57) **Abstract**

The present invention provides a method for manufacturing an imitation wood and is featured by adjusting the temperature of a discharge outlet before or during conveyance of thermoplastic elastomers in a helical section of a screw extruder to be lower than the temperature of a tail end of the helical section, such that the viscosity of the thermoplastic elastomers in the discharge outlet increases and the flow velocity reduces at the outlet during the discharge process at the discharge outlet. Thus, the thermoplastic elastomers flow in a direction opposite to the discharge direction and rub, resulting in marks of back-flow and rubbing. During the process of back-flow and rubbing, the plastics will be pulled and break along the rubber elastomers and become filament-like, thereby generating filaments similar to wood. Then, the foaming blank material is squeezed out of the discharge outlet and is forced into a molding machine to proceed with planarity trimming, and the output material is cooled with a preset cold-bath tank of the molding machine, providing adjustment of different densities of imitation wood, such that the imitation wood produced by the present invention has high simulation of wood.

## Description

### TECHNICAL FIELD

The present invention relates to a method for manufacturing imitation wood.

### BACKGROUND OF THE INVENTION

With the evolution of technology over time, many materials, such as metal, plastics, ceramics, etc. have been used for various objects including everyday articles, furniture, car interior decorations, etc. Nevertheless, many people pursuing the taste of nature, old fashion, etc. still love wood. However, due to slow growth of trees and consideration of environmental protection, ecological conservation, and conservation of soil and water, tree felling is restricted by the government of every country. Thus, the price of wood soars as the supply decreases. Apart from acquiring wood with a high price, the industry develops so-called "imitation wood" to replace wood.

The above-mentioned imitation wood generally includes:
1. Although the colors of various materials have been adjusted to be close to the color of wood, or the surfaces of objects have been painted or embossed to present wood grains, there is no substantial change in the body. Only the shallow surfaces of the objects present the wood grains, lacking presentation of imitation wood fibers and providing insufficient simulation of wood.
2. Since the wood grains are formed on the surfaces of the objects and since there is no substantial change, the anti-slipping effect and the nail holding ability are not satisfactory.
3. The objects having different materials in the surfaces and the interior are apt to generate deformation and desorption phenomena including peeling of the surface material, peeling of the paint, etc.

### BRIEF SUMMARY OF THE INVENTION

In view of the deficiency of the current technology, an objective of the present invention is to provide a method for manufacturing imitation wood to fix the above problems.

To achieve the above objective, the technical solution adopted by the present invention is a method for manufacturing imitation wood including at least the following steps of:
1. providing a screw extruder including a feeding hopper and an extrusion head respectively at two ends thereof, with the extrusion head connected to a discharge outlet, and with a helical section located between the feeding hopper and the extrusion head;
2. feeding thermoplastic elastomers (TPE) into the helical section through the feeding hopper, and conveying the thermoplastic elastomers in the helical section;
3. adjusting the temperature of the discharge outlet before or during conveyance to be lower than the temperature of a tail end of the helical section, wherein the viscosity of the thermoplastic elastomers increases and the flow velocity reduces at the outlet during the discharge process at the discharge outlet, such that the thermoplastic elastomers flow in a direction opposite to the discharge direction and rub, resulting in marks of back-flow and rubbing, and wherein a foaming blank material is then squeezed out of the discharge outlet; and
4. selectively adjusting the rotating speed of the helical section of the screw extruder, forcing the foaming blank material to enter a molding machine, with the molding machine including a molding port having a cross sectional shape identical to a cross sectional shape of the discharge outlet, with the molding port connected to and intercommunicated with a molding section having an identical cross sectional shape, with the foaming blank material guided into the molding section to proceed with planarity trimming, and cooling the output material with a preset cold-bath tank of the molding machine.

An interior of the helical section is divided into and defined as a plurality of sections according to different temperatures.

The plurality of sections includes a first section, a second section, a third section, and a fourth section. The temperatures of the first section, the second section, the third section, and the fourth section are adjusted as follows:
the first section: 120°C-140°C;
the second section: 135°C-150°C;
the third section: 145°C-160°C; and
the fourth section: 155°C-165°C.

The temperature of the discharge outlet is 95°C-140°C .

The present invention uses the characteristics of the thermoplastic elastomers (TPE) having rubber with high elasticity and plastics as well as excellent color dyeability and soft touch to possess mild feature of wood.

The operating principle and effects of the present invention are that the temperature of the discharge outlet is lower than the helical section. Since the low temperature of the discharge outlet causes an increase in the viscosity of the thermoplastic elastomers in the discharge outlet and a reduction in the flow velocity at the outlet, the screw extruder continues rotating to push the material. The difference in the flow velocity results in a squeezing process. The thermoplastic elastomers flow in a direction opposite to the discharge direction and rub, resulting in marks of back-flow and rubbing. During this stage, the thermoplastic elastomers are in the foaming process, such that the marks of back-flow and rubbing generate grain similar to wood.

During the process of back-flow and rubbing, the plastics will be pulled and break along the rubber elastomers and become filament-like, thereby generating filaments similar to wood.

When the thermoplastic elastomers are leaving the discharge outlet, the foaming phenomenon is released, and the material squeezed out is fluffier and becomes a foaming blank material. The rotating speed of the helical section of the screw extruder is selectively adjusted to force the foaming blank material to enter a molding machine. The molding machine includes a molding port having a cross sectional shape identical to a cross sectional shape of the discharge outlet. The molding port is connected to and intercommunicated with a molding section having an identical cross sectional shape. The foaming blank material is guided into the molding section to proceed with planarity trimming, and the output material is cooled with a preset cold-bath tank of the molding machine, providing adjustment of various imitation wood density differences, such that the imitation wood produced by the present invention has high simulation of wood.

### DESCRIPTION OF THE DRAWINGS

FIG. 1 is a flowchart of the present invention.
FIG. 2 is a schematic diagram of a system of the present invention.

**Reference number description:**

| | | | | | |
|---|---|---|---|---|---|
| 1 | screw extruder | 11 | feeding hopper | 12 | extrusion head |
| 121 | discharge outlet | 13 | helical section | 131 | first section |
| 132 | second section | 133 | third section | 134 | fourth section |
| 2 | molding machine | 21 | molding port | | |
| 22 | molding section | 23 | cold-bath tank | | |
| A | thermoplastic elastomers | | | | |

### DETAILED DESCRIPTION OF THE INVENTION

The technical contents, features, and embodiments of the present invention will be described in connection with the drawings, such that the Examiner can have a better understanding of the present invention.

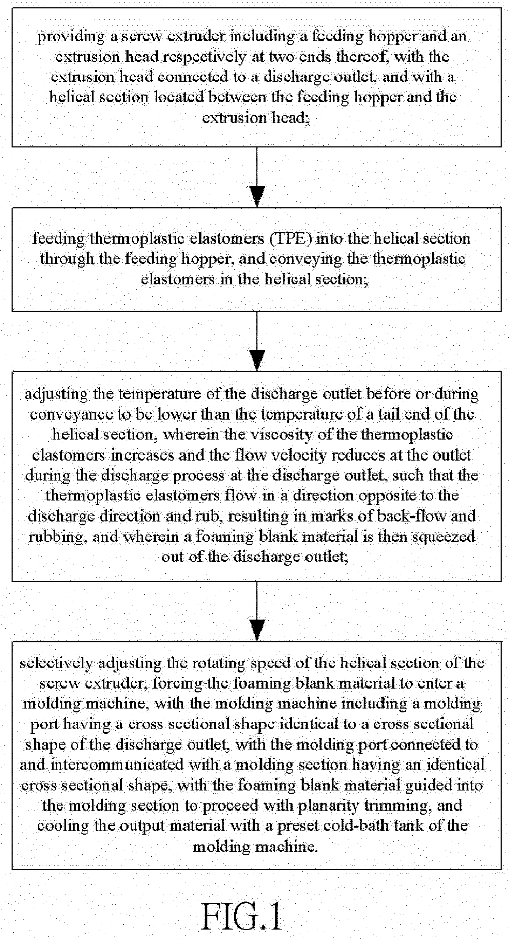

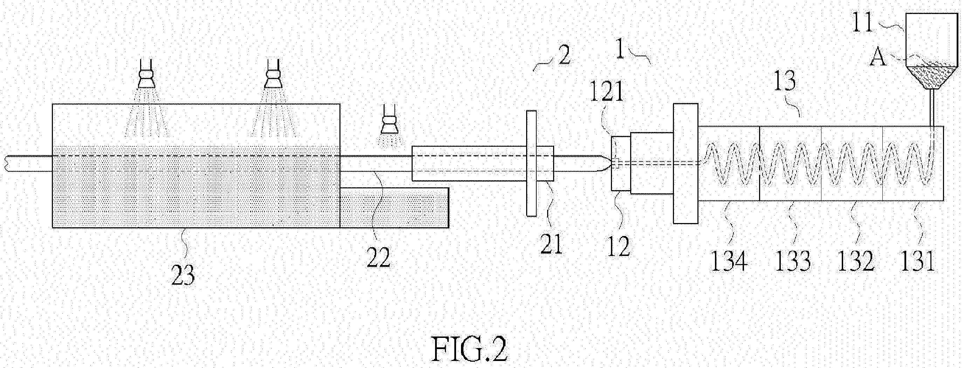

With reference to FIGS. 1 and 2, the steps of the present invention include:
1. Providing a screw extruder 1 including a feeding hopper 11 and an extrusion head 12 respectively at two ends thereof. The extrusion head 12 is connected to a discharge outlet 121. A helical section 13 is located between the feeding hopper 11 and the extrusion head 12. It is noted that the extrusion head 12 in this embodiment generally has a cross sectional area smaller than an inner cross sectional area of the screw extruder 1, so as to provide a better pressure accumulating/foaming time. Furthermore, the rotating speed of the screw extruder 1 ranges from 100 to 400 rpm to adjust the foaming time and the foaming extent, thereby adjusting the product density after taking shape. The interior of the screw extruder 1 can include a single screw or two screws according to the extent of mixing and stirring. Furthermore, the interior of the helical section 13 can be divided into and defined as a plurality of sections according to different temperatures, such as a first section 131, a second section 132, a third section 133, and a fourth section 134.
2. Feeding thermoplastic elastomers A into the helical section 13 through the feeding hopper 11, and conveying the thermoplastic elastomers A in the helical section 13 toward the extrusion head 12. During this process, the temperatures of the first section 131, the second section 132, the third section 133, and the fourth section 134 can be adjusted appropriately. For example:
   the first section 131: 120°C-140°C;
   the second section 132: 135°C-150°C;
   the third section 133: 145°C-160°C; and
   the fourth section 134: 155°C-165°C.

   Furthermore, the temperature of the extrusion head 12 is 150°C-165°C to create a higher flow velocity difference, thereby generating more abundant disturbing patterns. It is noted that there are many types and grains of wood and there are no certain specifications. Thus, "appropriate adjustment" and "more abundant disturbing patterns" are not unclear description and are produced according to the complexity of the wood grains required by the customers, such as patterns of chevrons and barks.
3. Adjusting the temperature of the discharge outlet 121 before or during conveyance to be lower than the temperature of a tail end of the helical section 13. In the above example, the tail end of the helical section 13 is the fourth section 134, and the temperature of the discharge outlet 121 is 95°C-140°C. The temperature of the discharge outlet 121 is smaller than the temperature of the fourth section 134 (155°C-165°C) which is the tail end of the helical section 13. Since the viscosity of the thermoplastic elastomers A increases and the flow velocity reduces at the outlet during the discharge process at the discharge outlet 121, the thermoplastic elastomers A flow in a direction opposite to the discharge direction and rub, resulting in marks of back-flow and rubbing. The foaming phenomenon is released, and the material squeezed out is fluffier and becomes a foaming blank material.
4. Selectively adjusting the rotating speed of the helical section 13 of the screw extruder 1, forcing the foaming blank material to enter a molding machine 2. The molding machine 2 includes a molding port 21 having a temperature of 20°C-60°C. The cross sectional shape of the molding port 21 is identical to the cross sectional shape of the discharge outlet 121. Furthermore, the molding port 21 is connected to and intercommunicated with a molding section 22 having an identical cross sectional shape. The foaming blank material is guided into the molding section 22 to proceed with planarity trimming. Furthermore, the output material is cooled by a preset cold-bath tank 23 of the molding machine 2 at a temperature of 5°C-30°C, providing adjustment of various imitation wood density differences, such that the imitation wood manufactured by the present invention has high simulation of wood.

The tail end of the foaming material can selectively be drawn by a traction device (not shown) providing assistance in drawing out the foaming material, not necessarily to slowly cooperate with the rotating speed of the helical section 13 of the screw extruder 1.

If desired, the back-end process may use a table saw and a rack for cutting and placing the products. A vacuum pump can be used to suck the water and vapor for cooling the empty mold, making the surfaces of the wood as smooth as polishing. The wood thus produced does not require second surface processing.

The imitation wood thus formed is not merely the surface grain. The imitation wood can be planed, cut, grinded, and sculptured. The interior of the imitation wood is similar to wood, and the wood dust looks real. The compression ratio of the extrusion head can be reduced to extrude wood fibers. The feeding ratio can be controlled to make wood knots. The following are the comparison with ordinary wood shaping processing methods:
1. Ordinary methods can only provide a color close to the color of wood by mixing ingredients of various colors according to a specific ratio. The manufacturing method of the present invention can produce many types of imitation woods.
2. Ordinary methods can only present the wood grain by subsequent coating. The present invention forms various grains through integral formation.
3. Ordinary methods can only make a rough surface and then proceed with formation by embossing. The present invention does not need second processing.
4. Ordinary methods can only achieve surface beautification after second processing, but cannot make wood fibers. The imitation wood fiber of the present invention is not inferior to wood and does not prick the hand.
5. Ordinary methods cannot provide surfaces with an anti-slipping effect after processing. The present invention provides increased anti-slipping effect when wet.
6. Ordinary products will bend due to uneven internal stress resulting from second processing. The shrinkage deformation of the present invention is smaller than 5/1000.
7. Ordinary products have a low nail holding ability. The present invention have a nail holding ability better than wood and can be repeatedly nailed.

Please refer to Attachment 1 which is a photograph of a product blank of the present invention before passing through the molding machine. Attachment 1 shows that the blank produced by the present invention presents wood grain, wood filaments, and imitation wood density, such that the imitation wood material produced by the present invention has high simulation of wood.

Please refer to Attachment 2 which is a photograph of a product of the present invention after passing through the molding machine. Attachment 2 shows that the presentation of the wood grain, wood filaments, and imitation wood density of the product of the present invention after planarity trimming by the molding machine can still be observed, such that the imitation wood material produced by the present invention has high simulation of wood.

Please refer to Attachment 3 which is a photograph of a product of the present invention after passing through the molding machine. Attachment 3 shows that the presentation of the wood flow grain, wood filaments, and imitation wood density of the product of the present invention after planarity trimming by the molding machine can still be observed, such that the imitation wood material produced by the present invention has high simulation of wood. Furthermore, the temperatures shown in Attachment 3 are the temperatures of the sections of the helical section.

The foregoing is merely an illustrative but not restrictive description of the invention. As can be understood by one having ordinary skill in the art, many modifications, changes or equivalents can be made without departing from the spirit and scope defined by the claims and still fall within the protection scope of the invention.

## Claims

1. A method for manufacturing imitation wood, **characterized by** including at least the following steps of:
(1) providing a screw extruder including a feeding hopper and an extrusion head respectively at two ends thereof, with the extrusion head connected to a discharge outlet, and with a helical section located between the feeding hopper and the extrusion head;
(2) feeding thermoplastic elastomers into the helical section through the feeding hopper, and conveying the thermoplastic elastomers in the helical section;
(3) adjusting the temperature of the discharge outlet before or during conveyance to be lower than the temperature of a tail end of the helical section, wherein the viscosity of the thermoplastic elastomers increases and the flow velocity reduces at the outlet during the discharge process at the discharge outlet, such that the thermoplastic elastomers flow in a direction opposite to the discharge direction and rub, resulting in marks of back-flow and rubbing, and wherein a foaming blank material is then squeezed out of the discharge outlet; and
(4) selectively adjusting the rotating speed of the helical section of the screw extruder, forcing the foaming blank material to enter a molding machine, with the molding machine including a molding port having a cross sectional shape identical to a cross sectional shape of the discharge outlet, with the molding port connected to and intercommunicated with a molding section having an identical cross sectional shape, with the foaming blank material guided into the molding section to proceed with planarity trimming, and cooling the output material with a preset cold-bath tank of the molding machine.

2. The method for manufacturing imitation wood as claimed in claim 1, **characterized by** that an interior of the helical section is divided into and defined as a plurality of sections according to different temperatures.

3. The method for manufacturing imitation wood as claimed in claim 2, **characterized by** that the plurality of sections includes a first section, a second section, a third section, and a fourth section, wherein the temperatures of the first section, the second section, the third section, and the fourth section are adjusted as follows:
the first section: 120°C-140°C;
the second section: 135°C-150°C;
the third section: 145°C-160°C;
the fourth section: 155°C-165°C; and
the temperature of the discharge outlet is 95°C-140°C.
